# EUROPÄISCHE PATENTANMELDUNG

(11) **EP 0 730 073 A2**
(43) Veröffentlichungstag der Anmeldung: **04.09.1996**
(21) Anmeldenummer: 96810109.7
(22) Anmeldetag: 27.02.1996
(51) Int. Cl.: E05B 49/00, E05B 35/00

(54) **Schliessvorrichtung mit elektrischer Verriegelung**

(30) Priorität: 03.03.1995 CH 604/95
(71) Anmelder: Kaba Schliesssysteme AG, 8620 Wetzikon (CH)
(72) Erfinder: Gretler, Heinrich, 8340 Hinwil (CH); Hächler, Carlo, 8335 Hittnau (CH)
(74) Vertreter: Frei, Alexandra Sarah

(57) **Zusammenfassung**

Die Schliessvorrichtung weist einen Zylinder (2), eine elektrische Verriege-lung (3) und eine Antenne (15) zur Informationsübertragung an einen zuge-ordneten Schlüssel (5) mit einem elektronisch codierten Identifikationsträger (6) auf. Den Zylinder umgibt eine Panzerung (10) aus Hartmaterial, ausserhalb welcher aussen am schlüsselseitigen Ende des Zylinders die Antenne (15) angeordnet ist. Die Antenne wird durch eine Haube (20) aus elektromagne-tisch durchlässigem Material abgedeckt. Dies ergibt eine hohe Sicherheit gegen mechanische Gewaltanwendung und ermöglicht gleichzeitig eine grosse Funktionsbreite mittels elektronischen und mechanischen Codierungssystemen.

## Beschreibung

Die Erfindung liegt auf dem Gebiete der Sicherheitstechnik mit Schliesssystemen und betrifft eine Schliessvorrichtung mit einem Zylinder und einer elektrischen Codierung gemäss dem unabhängigen Patentanspruch 1. Solche Schliesssysteme mit sowohl mechanischen als auch elektronischen Codierungen sind beispielsweise aus der DE 42 30 293 A1 bekannt. Damit lassen sich eine Vielzahl von Funktionen und Aufgaben erfüllen wie Blockierungsfunktion einer Schliessvorrichtung, um Befugten freien Eintritt zu geben und Unbefugten den Eintritt zu verwehren, um die Identifikation verschiedener Befugter zu prüfen und ihnen verschiedene ihnen zukommende Funktionen zuzuweisen, wie auch für Informationsverwaltung und -übertragung. Mit diesen bekannten Systemen ist ein hohes Mass an Codierungssicherheit durch die Kombination der mechanischen und der elektronischen Codierung erreichbar. Dennoch ist jedes Schliesssystem mit noch so hoher Codierungssicherheit auch einer direkten rein mechanischen Gewaltanwendung ausgesetzt, mit welcher eine Schliessvorrichtung geöffnet werden könnte, auch wenn die Codierungen nicht zu überwinden sind. Zum Schutze gegen derartige mechanische Gewaltanwendungen sind bei mechanischen Schlössern Panzerungen bekannt geworden. Diese Panzerungen beeinträchtigen und beschränken jedoch die elektronischen Codierungs- und Identifikationsfunktionen, und im speziellen die kontaktlose Energie- und Informationsübertragung.

Es ist daher Aufgabe der vorliegenden Erfindung, eine Schliessvorrichtung für ein Schliesssystem mit zugeordneten Schlüsseln und elektronischen Codierungen zu schaffen, welches eine hohe Sicherheit gegen mechanische Gewaltanwendung aufweist und gleichzeitig auch die volle Funktionsbreite von elektronischen und mechanischen Codierungssystemen ermöglicht.

Diese Aufgabe wird erfindungsgemäss gelöst durch eine Schliessvorrichtung nach Anspruch 1. Die Panzerung schützt dabei die Schliessvorrichtung gegen mechanische Gewaltanwendung. Die aussenliegende Antenne nahe einem eingesteckten Schlüssel ergibt eine optimale Informations- und Energieübertragung für alle gewünschten elektronischen Funktionen und die elektromagnetisch durchlässige Haube ergibt einen Schutz für die Antenne im normalen Gebrauch. Bei illegaler mechanischer Gewaltanwendung jedoch würde die Antenne wohl rasch zerstört werden, womit aber auch die elektrische Verriegelung endgültig gesperrt bleibt. Die Panzerung wiederum verhindert anschliessend weitgehend ein Öffnen der Schliessvorrichtung durch rein mechanische Gewaltanwendung. Erst durch die erfindungsgemässe Kombination dieser Merkmale kann daher die obgenannte Aufgabe gelöst werden.

Die abhängigen Patentansprüche betreffen vorteilhafte Weiterbildungen der Erfindung, mit welchen die Sicherheits- und Funktionseigenschaften weiter verbessert werden können. Im folgenden wird die Erfindung anhand von Beispielen und Figuren weiter erläutert. Dabei zeigen:
- Fig. 1: eine erfindungsgemässe Schliessvorrichtung mit Zylinder, Panzerung, Antenne und Abdeckhaube
- Fig. 2: eine elektrische Verriegelung mit Betätigungsteil und Sperrteil
- Fig. 3: eine Antennenanordnung
- Fig. 4: eine Anordnung der Panzerung

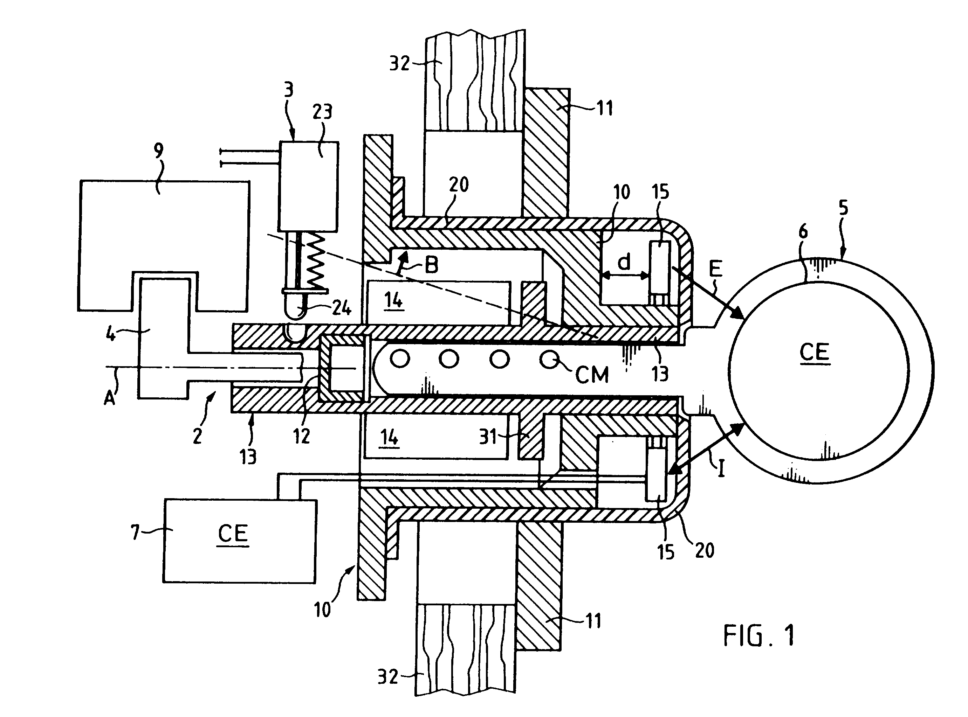

Figur 1 zeigt eine erfindungsgemässe Schliessvorrichtung mit einem Zylinder 2 mit Zylinderachse A, welcher einen Rotor 13 und einen Stator 14 aufweist, mit einer elektrischen Verriegelung 3, mit einer Antenne 15 sowie mit einem zugeordneten Schlüssel 5, auf welchem ein elektrischer Identifikationsträger 6 angebracht ist. Der Zylinder ist von einer Panzerung 10 aus Hartmaterial umgeben, welche in einen die Schliessvorrichtung überdeckenden Schild 11 übergeht. Die Panzerung 10 kann dabei auch aus zwei oder mehr Teilen bestehen. Möglichst nahe am eingesteckten Schlüssel mit Identifikationsträger 6 ist eine ringförmige Antenne 15 angebracht. Diese Antenne wird durch eine leichte Abdeckhaube 20 aus elektromagnetisch durchlässigem Material, z.B aus Kunststoff geschützt. Damit wird eine optimale und unbehinderte Informationsübertragung I zwischen dem Identifikationsträger 6 und der Antenne 15 ermöglicht. Dies ist besonders wichtig für passive Identifikationsträger ohne eigene Engergieversorgung, bei denen die benötigte Energie E, z.B. als elektromagnetische Hochfrequenz-Strahlung ebenfalls durch die Antenne 15 auf den Identifikationsträger 6 übertragen werden muss. Dabei kann vorteilhafterweise mit der HF-Energieübertragung von der Antenne 15 an den Identifikationsträger 6 gleichzeitig auch eine Informationsübertragung stattfinden. Die Antenne ist mit einer Lesestation oder mit einer Schreib-Lesestation 7 verbunden, welche die elektronische Steuerung und Codierung CE enthält. Der Schlüssel 5 kann (muss aber nicht) zusätzlich zur elektronischen Codierung CE auch noch eine mechanische Codierung CM bekannter Art aufweisen.

Auch ohne mechanische Codierung, d.h. z.B. für Schlüsselrohlinge, wird die Schliessvorrichtung immer durch den Schlüssel mechanisch betätigt. Nach Einstecken des Schlüssels in den Schliesszylinder wird die elektronische Codierung CE des Identifikationsträgers 6 überprüft, bzw. dessen Zutrittsberechtigung geprüft. Bei einer zugelassenen Identifikation wird die elektrische Verriegelung 3 geöffnet und damit die Drehung des Zylinders freigegeben. Durch Drehung des Schlüssels wird dann wie bekannt ein Mitnehmer 4 des Schliesszylinders bzw. des Rotors 13 bewegt, welcher seinerseits ein Sicherheitselement 9 betätigt. Das Sicherheitselement 9 kann ein Riegel eines Schlosses oder ein Schalter oder auch ein anderes mechanisch betätigtes Element sein.

Die elektrische Verriegelung 3 wird mit Vorteil im Bohrschatten B der Panzerung angeordnet, so dass sie auch durch Aufbohren eines weniger harten Zylinderrotors 13 mit einem Bohrer nicht erreicht werden kann.
Die Zylinderpanzerung 10 kann auch ein äusserer integrierender Teil des Zylinders 2 sein.

Zusätzlich kann die Panzerung, je nach vorgesehener Anwendung, noch weitere Elemente urnfassen:
es kann ein Einlegeteil 12 den Rotorquerschnitt abdecken,
der Rotor 13 selber kann Hartmaterial aufweisen,
die anschliessende Objektoberfläche z.B. eine Wand oder Türe 32 sollte ebenfalls eine angemessene Panzerung aufweisen, sodass alle die Aussenbegrenzung eines zu schützenden Objekts bildenden Elemente dieselbe Einbruchssicherheit aufweisen.

Auch ein Ausreissschutz 31 am Rotor 13 fügt sich in dieses Sicherheitskonzept ein.

Die Panzerung 10 wird vorzugsweise aus einem Material ausgeführt, welches einen hohen Widerstandszeitwert in Bezug auf mechanische Angriffe mit bekannten Werkzeugen aufweist. Die Panzerung besteht vorzugsweise aus gehärtetem Stahl, aber auch Hartmetall, Sintermaterial und Keramikverbundwerkstoffe können am richtigen Ort eingesetzt mechanische Gewaltanwendungen wesentlich behindern und verzögern.

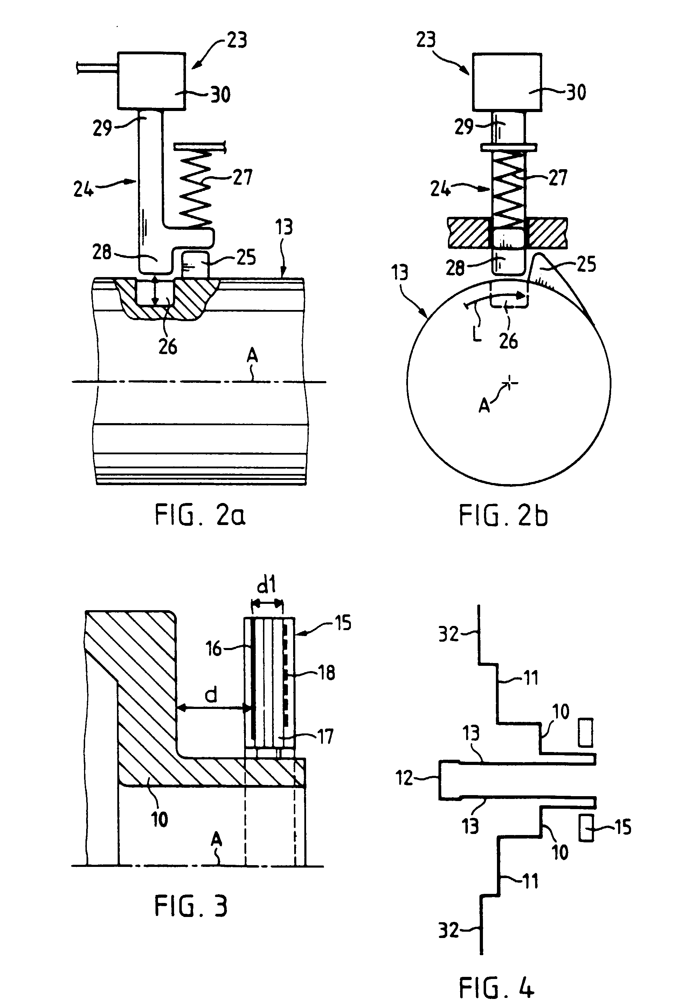

Figur 2 illustriert in Seitenansicht 2a und in Frontansicht 2b schematisch ein Beispiel einer elektrischen Verriegelung mit einem Betätigungsteil 23 und einem Sperrteil 24, welche eine Servowirkung aufweisen, indem der Sperrteil hauptsächlich durch beim Drehen auf den Schlüssel ausgeübte Kräfte bewegt wird und wobei jedoch zur Betätigung, d.h. zum Blockieren oder Freigeben der Verriegelung nur sehr wenig Steuerungsenergie (z.B. aus einer Batterie) am Betätigungsteil benötigt wird. Dies ist hier realisiert durch einen Sperrteil 24 mit einem Sperrzapfen 28, welcher auf einem Nocken 25 des Zylinderrotors 13 abläuft. Beim Drehen des Schlüssels bzw. des Rotors 13 um einen Leerweg L wird der Sperrteil vom Nocken 25 so weit angehoben, dass der Sperrzapfen 28 aus dem zugeordneten Schliessloch 26 im Rotor 13 herausgehoben wird und so, dass die magnetische Verlängerung 29 an einem Elektomagneten 30 anliegt. Dann wirkt hier der Elektromagnet 30 als Betätigungs- oder Steuerteil: falls durch die elektronische Codierung EC autorisiert, hält der Elektromagnet unter Strom den Betätigungsteil 24 mit sehr geringem Leistungsaufwand am Elektromagneten fest und damit in Offenposition. Die Drehung des Zylinders ist damit freigegeben. Falls durch die elektronische Codierung nicht autorisiert, wird der Elektromagnet abgeschaltet, es fliesst kein Strom mehr und der Sperrteil 24 wird durch die Feder 27 wieder nach unten gedrückt, so dass der Zapfen 28 ins Loch 26 fällt und damit die Drehung des Zylinders und die Schliessvorrichtung blockiert ist. Auch bei Stromausfall, Erschöpfung einer Speisebatterie oder einer Störung bleibt die Verriegelung 3 gesperrt.

Figur 3 zeigt einen Querschnitt durch eine kreisringförmige Antenne 15, welche in einem Abstand d von der elektrisch leitenden Panzerung 10 des Zylinders am schlüsselseitigen Ende befestigt ist. Die Antenne ist z.B. als gedruckte Schaltung mit einem Mehrschichtaufbau 17 ausgeführt. Eine vordere, dem Schlüssel zugewandte Schicht ist als spiralförmige Antenne 18 ausgebildet und gegen die Panzerung 10 ist eine Abschirmschicht 16 angeordnet. Dadurch wird die Antenne 18 gegen den Einfluss der metallischen Schliessvorrichtung und der Panzerung 10 immunisiert. Veränderungen des Abstandes von metallisch leitenden Elementen zur Antenne 18 bewirken eine Veränderung der elektrischen Abstimmwerte der Antenne. Durch die Immunisierung mittels der Abschirmschicht 16, in einem konstanten Abstand d1 zur Antenne 18, wird dieser Einfluss auf die Antenne sehr stark reduziert.

Vorzugsweise wird, soweit dies die Platzverhältnisse ermöglichen, ein Abstand d zwischen Antenne 18 und leitender Panzerung 10 von mindestens 3 mm, z.B. von 5 - 15 mm eingehalten. Der Abstand dl zwischen Antenne 18 und Abschirmschicht 16 beträgt mindestens 0.5 mm, vorzugsweise z.B. 1 - 5 mm. In einer anderen Ausführungsvariante kann die Antenne 18 auch an der Abdeckhaube 20 angebracht oder in diese integriert sein.

Figur 4 illustriert beispielsweise wie durch die Panzerung ein lückenloser Schutz eines Objekts gegen mechanische Angriffe erreicht werden kann. Die Elemente, ausgehend von einer Wand oder Türe 32 über einen Schild 11, einen Zylinderpanzer 10, einen Zylinderrotor 13 und ein Einlegeteil 12 sind so aneinander anschliessend angeordnet und je aus einem geeigneten Hartmaterial angefertigt, dass eine lückenlose Gesamt-Panzerung ohne Schwachstellen gebildet wird.

## Patentansprüche

1. Schliessvorrichtung mit einem Zylinder (2), einer elektrischen Verriegelung (3) und mit einer Antenne zur Informationsübertragung I an einen zugeordneten Schlüssel (5) mit einem Identifikationsträger (6), welcher eine elektronische Codierung CE enthält, dadurch gekennzeichnet, dass eine den Zylinder umgebende Panzerung (10) aus Hartmaterial vorgesehen ist, dass die Antenne (15) ausserhalb dieser Panzerung am schlüsselseitigen Ende des Zylinders angeordnet ist und dass die Antenne durch eine Haube (20) aus elektromagnetisch durchlässigem Material abgedeckt ist.

2. Schliessvorrichtung nach Anspruch 1, dadurch gekennzeichnet, dass der Zylinder zusätzlich eine mechanische Codierung CM aufweist.

3. Schliessvorrichtung nach Anspruch 1, dadurch gekennzeichnet, dass die Antenne zur Energieübertragung E an einen passiven Identifikationsträger (6) eines zugeordneten Schlüssels ausgebildet ist.

4. Schliessvorrichtung nach Anspruch 1, dadurch gekennzeichnet, dass die elektrische Verriegelung einen Betätigungsteil (23) und einen Sperrteil (24) mit einer Servowirkung aufweist.

5. Schliessvorrichtung nach Anspruch 1, dadurch gekennzeichnet, dass die elektrische Verriegelung im Bohrschatten (B) der Panzerung angeordnet ist.

6. Schliessvorrichtung nach Anspruch 1, dadurch gekennzeichnet, dass die Antenne (18) ringförmig ausgebildet und in einem Abstand d zur Panzerung (10) angeordnet ist.

7. Schliessvorrichtung nach Anspruch 6, dadurch gekennzeichnet, dass der Abstand d 5 bis 15 mm beträgt.

8. Schliessvorrichtung nach Anspruch 1, dadurch gekennzeichnet, dass die Antenne mit mindestens einer Abschirmschicht (16), in einem Abstand d1 von 1 bis 5 mm, von der Antenne (18) immunisiert ist.

9. Schliessvorrichtung nach Anspruch 8, dadurch gekennzeichnet, dass die Antenne als gedruckte Schaltung mit einem Mehrschichtaufbau (17) und mit einer spiralförmigen Antenne (18) ausgebildet ist.

10. Schliessvorrichtung nach Anspruch 1, dadurch gekennzeichnet, dass das Hartmaterial der Panzerung (10) einen hohen Widerstandszeitwert aufweist.

11. Schliessvorrichtung nach Anspruch 1, dadurch gekennzeichnet, dass die Panzerung aus gehärtetem Stahl besteht.

12. Schliessvorrichtung nach Anspruch 1, dadurch gekennzeichnet, dass die Panzerung aus Hartmetall, aus Sintermaterial oder Keramik-Verbundstoffen besteht.

13. Schliessvorrichtung nach Anspruch 1, dadurch gekennzeichnet, dass die Abdeckhaube (20) aus Kunststoff besteht.

14. Schliessvorrichtung nach Anspruch 1, dadurch gekennzeichnet, dass die Panzerung auch einen die Schliessvorrichtung überdeckenden Schild (11) aufweist.

15. Schliessvorrichtung nach Anspruch 1, dadurch gekennzeichnet, dass die Panzerung auch einen Einlegeteil (12) im Zylinderrotor aufweist.

16. Schliessvorrichtung nach Anspruch 1, dadurch gekennzeichnet, dass die Panzerung auch durch den Zylinderrotor (13) gebildet wird.

17. Schliessvorrichtung nach Anspruch 1, dadurch gekennzeichnet, dass die Antenne (18) an der Abdeckhaube (20) angebracht ist.
